# FASCICULE DE BREVET EUROPEEN

(11) **EP 0 661 369 B1**
(45) Date de publication et mention de la délivrance du brevet: **31.03.1999**
(21) Numéro de dépôt: 94402866.1
(22) Date de dépôt: 13.12.1994
(51) Int. Cl.: C10C 3/02

(54) **Compositions améliorées de bitume, leur procédé de préparation et leur applications**
Verbesserte Zusammensetzungen von Bitumen, ihren Verfahren zur Herstellung und ihre Anwendungen
Improved compositions of bitumen, their process for making and their applications

(30) Priorité: 30.12.1993 FR 9315890
(43) Date de publication de la demande: 05.07.1995
(73) Titulaire: TOTAL RAFFINAGE DISTRIBUTION S.A., 92800 Puteaux (FR)
(72) Inventeur: Jamois, Didier, F-76310 Sainte Adresse (FR); Jolivet, Yannick, F-76600 Le Havre (FR); Le Perchec, Pierre, F-69003 Lyon (FR); Fixari, Bernard, F-38200 Vienne (FR)
(74) Mandataire: Jolly, Jean-Pierre

(56) Documents cités:
- EP-A- 0 547 766
- FR-A- 2 265 823
- GB-A- 2 015 536
- GB-A- 2 074 147

## Description

La présente invention concerne des compositions améliorées de bitume, leur procédé de préparation et leurs applications.

Le bitume peut être obtenu, notamment, à partir du pétrole brut, par distillation de celui-ci et/ou désasphaltage de la fraction lourde issue de la (ou les) distillation(s). Le bitume est constitué, selon l'origine du pétrole brut, de proportions variables d'huiles paraffinique (aliphatique ou naphténique) et aromatique, de résines et d'asphaltènes (on peut se reporter à ce sujet, pour avoir plus de détails, au brevet EP 246 956, dont la Demanderesse est titulaire).

Le bitume est un matériau viscoélastique : il tend à devenir dur et cassant aux basses températures ; il se ramollit et peut fluer aux températures élevées. Sa sensibilité à la température varie selon son origine et son procédé de fabrication.

Il est bien connu de modifier le bitume par addition d'un polymère. L'addition d'un polymère au bitume a notamment pour objectif de diminuer la susceptibilité thermique des bitumes en élargissant l'intervalle de plasticité (par augmentation de la température de ramollissement et/ou diminution de la température de fragilité à froid). Cependant, l'addition de polymère au bitume pose des problèmes de compatibilité, qui conduisent à l'instabilité du mélange bitume/polymère lors de son stockage, avant son application sur une route, par exemple.

En outre, il est connu que l'addition de polymère à un bitume n'améliore pas sensiblement sa résistance au vieillissement, caractérisée par le test bien connu RTFOT (Rolling thin film oven test) (voir norme AFNOR T66-032).

Un bitume est réputé bien vieillir quand sa pénétrabilité (déterminée selon la norme AFNOR NFT66-004) ne diminue pas trop lors du test RTFOT et quand sa température de ramollissement (déterminée selon la norme AFNOR NFT66-008) n'augmente pas trop lors du même test.

La Demanderesse a cherché à mettre au point des bitumes améliorés présentant à la fois une susceptibilité à la température diminuée, un bon comportement rhéologique à froid et à chaud, une bonne résistance au vieillissement et une cohésivité améliorée, sans addition de polymère présentant les inconvénients ci-dessus.

Il est déjà connu de modifier chimiquement le bitume par greffage d'un monoanhydride tel que l'anhydride phtalique ou l'anhydride maléique, comme décrit dans la revue "Materiales de construccion" V37 H205 - 1987, pages 49 à 56, afin de diminuer notamment leur susceptibilité thermique. FR-A-2 265 823 décrit le traitement des bitumes à l'anhydride.

La Demanderesse a constaté qu'avec les anhydrides décrits dans cet article, les résultats obtenus n'étaient pas satisfaisants.

GB-A-2 015 536 décrit le greffage sur un bitume, en présence d'oxyde de zinc agissant comme catalyseur, d'un dihalopolybutadiène. Le bitume ainsi modifié peut être mélangé avec un élastomère, par exemple avec un polychloroprène ou du polynorbornène, ou encore avec un polymère séquencé, par exemple avec du styrène butadiène.

GB-A-2 074 147 concerne des compositions de brais contenant des composés organiques halogénés, tels que celui commercialisé sous l'appellation Phosgard, qui est un retardateur de combustion.

La Demanderesse a établi que certaines familles de composés chimiques difonctionnels dérivés d'acide conduisent à l'obtention de bitumes possédant une gamme de propriétés nettement améliorées, et ceci même à partir de bases bitumineuses de qualité insuffisante pour leur emploi en l'état comme bitumes routiers ou industriels.

Le but de la présente invention est donc l'obtention de bitumes améliorés présentant un bon comportement rhéologique à chaud et à froid, une bonne résistance au vieillissement, ainsi qu'une meilleure cohésivité, à partir éventuellement de bases bitumineuses a priori difficilement utilisables, car de qualités insuffisantes.

A cet effet, l'invention a pour premier objet des compositions de bitumes modifiés, caractérisées en ce qu'elles sont obtenues par traitement d'au moins une base bitumineuse à l'aide d'un composé dérivé d'acide comportant au moins deux fonctions aptes à se greffer respectivement sur un ou plusieurs site(s) situé(s) sur deux ensembles aromatiques différents ou plus de la base bitumineuse, pour les réunir par pontage, ce composé dérivé d'acide étant choisi dans le groupe constitué par les dianhydrides et les dihalogénures d'acide.

La préparation desdites compositions et leurs applications constituent d'autres objets de l'invention.

Au sens de la présente invention, on entend par :
- ensemble aromatique : un groupement d'au moins une molécule hydrocarbonée possédant au moins un noyau aromatique, ledit noyau pouvant posséder au moins une chaîne hydrocarbonée ou non, ladite molécule pouvant posséder des hétéroatomes tels que le soufre, l'oxygène, l'azote, des métaux tels que le nickel et le vanadium ;
- pontage : un lien chimique à l'aide d'une molécule difonctionnelle entre deux ensembles aromatiques ;
- traitement de la base bitumineuse : un mélange sous agitation de celle-ci avec ledit composé, à une température supérieure à la température de ramollissement de ladite base, pendant une durée suffisante pour permettre un pontage de deux ensembles aromatiques de cette base à l'aide dudit composé.

Les effets de ce traitement ne sont que des hypothèses émises par la Demanderesse et apparemment confirmées par les essais effectués, mais ils ne peuvent être considérés comme une limitation de l'invention, compte tenu de la complexité de la composition des bitumes.

Au sens de la présente invention, le bitume, également appelé base bitumineuse, utilisable dans les compositions améliorées est un bitume issu du pétrole brut, des schistes bitumineux, d'huiles lourdes, de sable bitumineux ou même de charbon.

Le bitume peut être, par exemple :
a la fraction la plus lourde obtenue par distillation directe sous pression atmosphérique ou sous pression réduite d'un pétrole brut ;
b la phase lourde obtenue par désasphaltage au solvant d'une fraction lourde obtenue selon a ;
c le produit de l'oxydation, en présence ou non de catalyseurs, d'une fraction lourde a ou d'une phase lourde b ;
d le produit de l'oxydation, en présence ou non de catalyseurs, d'un mélange d'une fraction lourde selon a ou d'une phase lourde selon b et :
   - d'un distillat ou
   - d'un extrait aromatique obtenu dans la désaromatisation des huiles lubrifiantes ou
   - d'un brai de désasphaltage ;
e un mélange d'un produit oxydé obtenu selon c ou d ou d'une base dure et :
   - d'un distillat ou
   - d'un extrait aromatique obtenu dans la désaromatisation des huiles lubrifiantes ou
   - d'un brai de désasphaltage ou
   - d'une fraction lourde selon a ou d'une phase lourde selon b ;
f une base viscoréduite, seule ou en mélange avec un des produits ci-dessus ;
g un des produits a à f en mélange avec au moins un des produits suivants :
   - un distillat ou
   - un extrait aromatique obtenu dans la désaromatisation des huiles lubrifiantes ou
   - un brai de désasphaltage ou
   - une fraction lourde aromatique ("slurry") issue d'un procédé de craquage catalytique.

Les compositions selon l'invention sont obtenues à partir d'au moins deux réactifs, le premier étant une base bitumineuse telle que celles citées plus haut et possédant de préférence une teneur en asphaltènes au moins égale à 1 % en masse (déterminée conformément à la norme AFNOR NFT60-115), et le second étant un composé dérivé d'acide choisi parmi les familles de réactifs difonctionnels ou polyfonctionnels suivants :
- dianhydrides aromatiques et aliphatiques,
- dihalogénures d'acides aromatiques et aliphatiques.

D'une façon générale, la réaction peut être effectuée à la pression atmosphérique, le réacteur étant muni d'une évacuation pour le dioxyde de carbone ou l'acide halogéné gazeux formé au cours de la réaction. La température est telle que le bitume soit mou ; elle est donc de préférence supérieure à 130°C et en outre inférieure à 300°C pour éviter la dégradation du bitume.

La température de réaction peut être comprise, de préférence, entre 160 et 230°C et la réaction est effectuée sous forte agitation, dans le cas de réactifs de type dihalogénures d'acides et dianhydrides.

Quel que soit le réactif chimique utilisé, sa teneur peut être comprise entre 0,05 % et 10 % en masse, de préférence entre 0,1 % et 3 % en masse. La durée de la réaction peut être comprise entre 1h et 30h, de préférence entre 1h et 5h.

En général, un bullage gazeux est souhaitable pour une meilleure homogénéisation du milieu réactionnel. De préférence, un bullage à l'air est utilisé.

Les compositions améliorées ainsi obtenues présentent :
- un point de Fraass égal ou inférieur à -13°C, de préférence -20°C,
- une bonne stabilité au stockage, définie par son "Δ bille-anneau" faible,
- une viscosité à 60°C très nettement supérieure à celle du bitume initial.

Dans ces définitions des caractéristiques du bitume modifié selon l'invention et dans la suite de la présente description :
1. le point de Fraass, indicateur de la fragilité à froid, est déterminé conformément à la norme AFNOR T66-026 ;
2. la stabilité au stockage est déterminée en stockant à 165°C, pendant 4 jours, un échantillon de la composition dans un récipient cylindrique et en déterminant la température "bille-anneau" (norme AFNOR NFT66-008) et la pénétrabilité des couches supérieure et inférieure de l'échantillon (norme AFNOR NFT66-004).

On peut ainsi obtenir les différences Δ bille-anneau et Δ pénétrabilité entre les couches supérieure et inférieure. Plus les Δ sont faibles, plus les compositions sont stables.

Les compositions de bitumes améliorées selon l'invention allient une bonne tenue à froid et à chaud, une bonne résistance au vieillissement, une meilleure cohésivité et une bonne stabilité au stockage.

Ces compositions peuvent être utilisées aussi bien dans les applications routières que dans les applications industrielles.

Elles peuvent être utilisées dans les applications routières, avec notamment des granulats ou charges classiques :
a - en l'état, pour la réalisation d'enrobés bitumineux ayant une bonne tenue à l'orniérage et une bonne résistance à la fatigue ;
b - en l'état ou fluxées par une coupe hydrocarbonée, pour la réalisation d'émulsions aqueuses bitumineuses ;
c - fluxée par une coupe hydrocarbonée, pour la réalisation d'enduits superficiels anhydres.

Les exemples suivants, qui n' ont pas de caractère limitatif, illustrent l'invention :

### EXEMPLE 1

Cet exemple concerne la préparation de compositions améliorées de bitume selon l'invention, à l'aide d'un réactif de type dianhydride.

On dispose de deux bases bitumineuses notées Vₒ et Xₒ, qui sont des mélanges de résidus de viscoréduction obtenus par distillation sous atmosphère réduite et d'extrait aromatique, inutilisables en l'état comme bitume. Les caractéristiques de ces bases sont données dans le Tableau I ci-après.

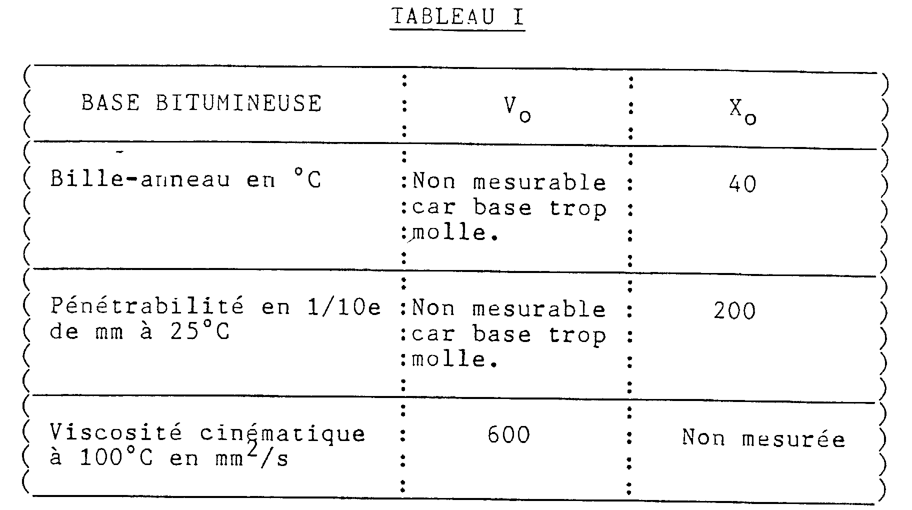

On appelle V et X les bases bitumineuses Vₒ et Xₒ, après traitement dans les conditions opératoires suivantes : dans un réacteur à une pression de 10⁵ Pa et à une température de 200°C, on introduit l'une des bases. La réaction est effectuée pendant 16 heures avec un débit d'air de 7,5 l/h.

Le même traitement est effectué avec les bases Vₒ et Xₒ additionnées de dianhydride phtalique.

On note :
- V31, la composition obtenue à partir de 3% en masse de dianhydride phtalique et de la base Vₒ,
- X31, la composition obtenue à partir de 3% en masse de dianhydride phtalique et de la base Xₒ,
- X51, la composition obtenue à partir de 5% en masse de dianhydride phtalique et de la base Xₒ.
- V'31, la composition obtenue à partir de 3% en masse de monoanhydride phtalique et de la base Vₒ.

Les caractéristiques de ces compositions sont données dans le Tableau II ci-après :

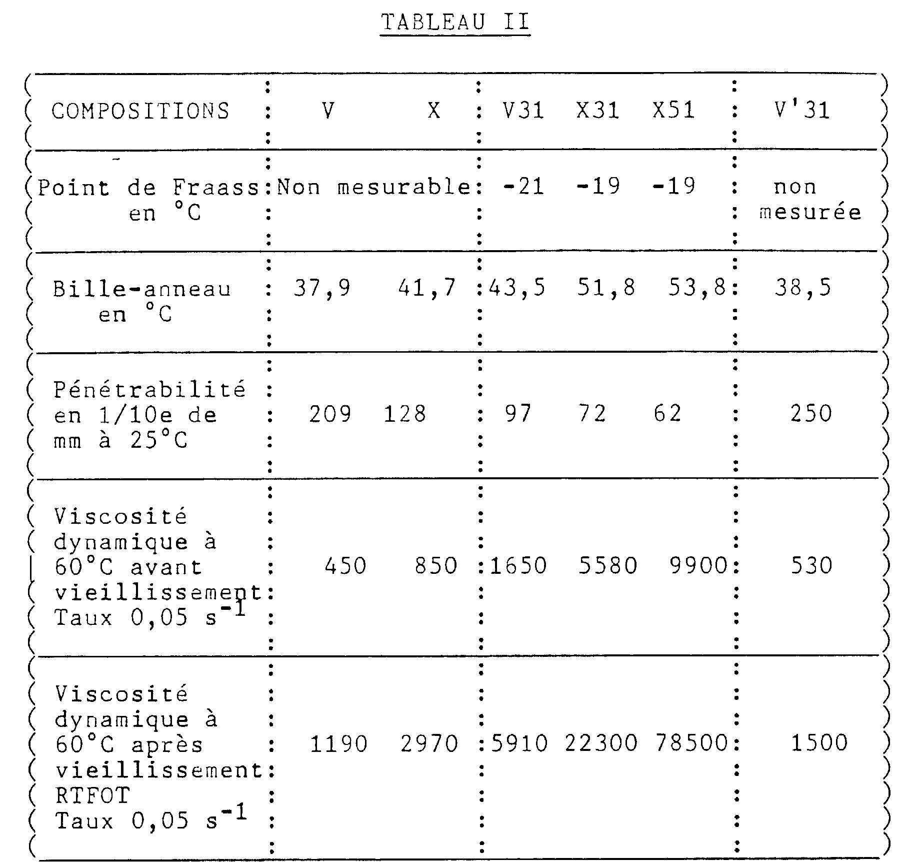

La stabilité au stockage ne nécessite aucune mesure, car l'absence d'agrégats dans le mélange est significative d'une bonne stabilité.

Les résultats présentés dans le tableau II montrent bien que les compositions V31, X31 et X51, obtenues par réaction du dianhydride phtalique avec différentes bases bitumineuses, ont à la fois un bon point de Fraass et une bonne viscosité dynamique, en comparaison des caractéristiques des bases bitumineuses seules, V et X, et de la composition V'31.

### EXEMPLE 2

Cet exemple concerne la préparation de compositions améliorées de bitumes selon l'invention, à l'aide de réactifs du type dihalogénures d'acides.

On dispose des deux bases bitumineuses notées Vₒ et Xₒ, mélanges de résidus de viscoréduction obtenus par distillation sous atmosphère réduite et d'extraits aromatiques, inutilisables en l'état comme bitume, dont les caractéristiques sont données dans le Tableau I de l'Exemple 1.

Comme précédemment, on note V et X les bases bitumineuses Vₒ et Xₒ après traitement dans les conditions opératoires suivantes : dans un réacteur à une pression de 10⁵ Pa et à une température de 200°C, on introduit l'une des bases Vₒ et Xₒ. Le traitement s'effectue pendant 16h sous un débit d'air de 7,5 l/h.

Le même traitement est effectué sur les bases Vₒ et Xₒ additionnées de réactif dichlorure d'adipoyle.

On note V32 la composition obtenue à partir de la base Vₒ et de 3 % en masse de dichlorure d'adipoyle, et on note X32 la composition obtenue à partir de la base Xₒ et de 3 % en masse de dichlorure d'adipoyle.

Le même traitement est effectué sur les bases Vₒ et Xₒ additionnées, comme réactif, de dichlorure de téréphtaloyle.

On note V'52 la composition obtenue à partir de la base Vₒ et de 5 % en masse de dichlorure de téréphtaloyle, X'32 la composition obtenue à partir de la base Xₒ et de 3 % en masse de dichlorure de téréphtaloyle, et X'52 la composition obtenue à partir de la base Xₒ et de 5 % en masse de dichlorure de téréphtaloyle.

Les caractéristiques des compositions obtenues sont données dans le Tableau III ci-après :

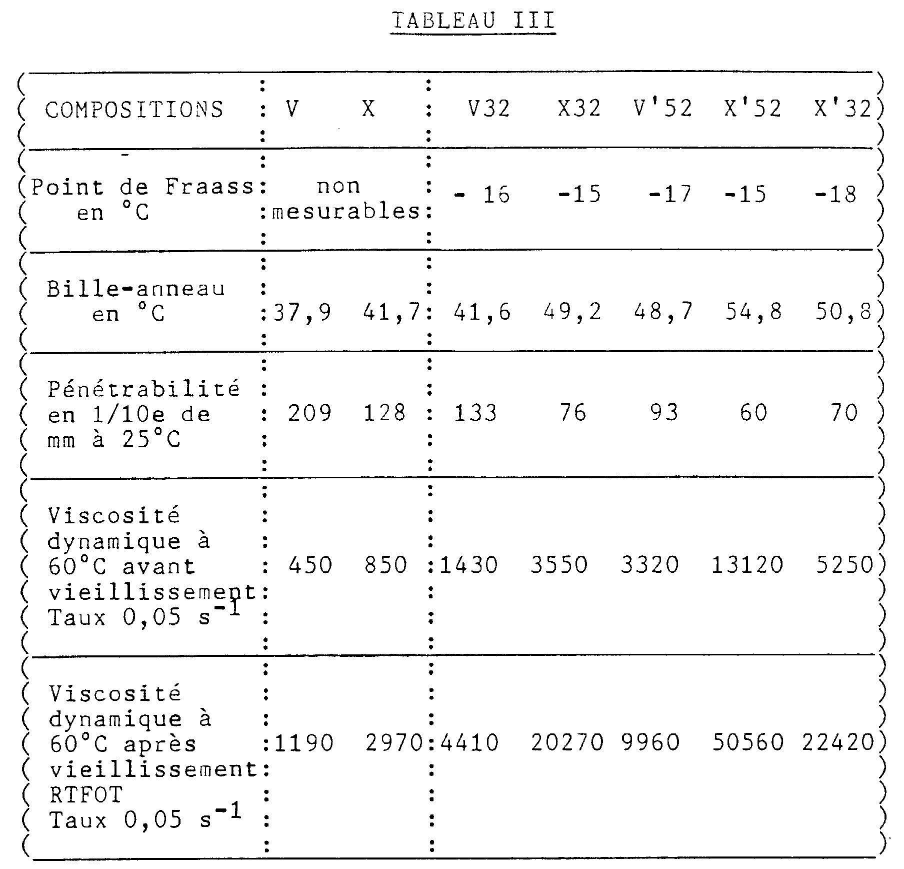

La stabilité au stockage ne nécessite aucune mesure car l'absence d'agrégats dans le mélange est significative d'une bonne stabilité.

Les résultats présentés dans le tableau III montrent bien que les compositions V32 et X32, obtenues par réaction du dichlorure d'adipoyle avec les bases Vₒ et Xₒ, et les compositions V'52, X'52 et X'32, obtenues par réaction de dichlorure de téréphtaloyle avec les bases Vₒ et Xₒ, ont à la fois une bonne viscosité dynamique et un bon point de Fraass en comparaison des caractéristiques des bases bitumineuses seules , V et X.

## Revendications

1. Composition de bitume modifié, caractérisée en ce qu'elle est obtenue par traitement d'au moins une base bitumineuse à l'aide d'un composé dérivé d'acide comportant au moins deux fonctions aptes à se greffer respectivement sur un ou plusieurs site(s) situé(s) sur deux ensembles aromatiques différents ou plus de la base bitumineuse, pour les réunir par pontage, ce composé dérivé d'acide étant choisi dans le groupe constitué par les dianhydrides et les dihalogénures d'acide.

2. Composition selon la revendication 1, caractérisée en ce que le composé dérivé d'acide est un dianhydride phtalique.

3. Composition selon la revendication 1, caractérisée en ce que le composé dérivé d'acide est choisi dans le groupe constitué par le dichlorure d'adipoyle et le dichlorure de téréphtaloyle.

4. Composition selon l'une des revendications 1 à 3, caractérisée en ce que le composé dérivé d'acide a été incorporé à la base bitumineuse à une teneur comprise entre 0,05 % et 10 % en masse et, de préférence, entre 0,1 à 3 % en masse de celle-ci.

5. Composition selon l'une des revendications 1 à 4, caractérisée en ce que la base bitumineuse est une base viscoréduite en mélange avec un extrait aromatique ou avec un slurry.

6. Procédé de préparation d'une composition selon la revendication 1, caractérisé en ce que l'on traite sous agitation une base bitumineuse avec au moins un composé dérivé d'acide comportant au moins deux fonctions aptes à se greffer chacune sur un site de deux éléments aromatiques de la base bitumineuse et choisi dans le groupe constitué par les dianhydrides et les dihalogénures d'acide, à une température supérieure à la température de ramollissement de la base bitumineuse et pendant une durée suffisante pour obtenir le pontage des deux ensembles aromatiques par ledit composé.

7. Procédé de préparation selon la revendication 6, caractérisé en ce que le traitement de la base bitumineuse est effectué à une température comprise entre 130 et 300°C et, de préférence, entre 160 et 230°C.

8. Procédé selon l'une des revendications 6 et 7, caractérisé en ce que le traitement de la base bitumineuse comporte un bullage de gaz et de préférence d'air dans la base bitumineuse additionnée dudit composé dérivé d'acide.

9. Application d'une composition selon l'une des revendications 1 à 5 ou d'une composition préparée par un procédé selon l'une des revendications 6 et 7 à la réalisation d'enrobés bitumineux.

10. Application d'une composition selon l'une des revendications 1 à 5 ou d'une composition préparée par un procédé selon l'une des revendications 6 et 7 à la réalisation d'émulsions aqueuses bitumineuses.

11. Application d'une composition selon l'une des revendications 1 à 5 ou préparée par un procédé selon l'une des revendications 6 et 7 à la réalisation d'enduits superficiels anhydrides.

## Patentansprüche

1. Modifizierte Bitumenzusammensetzung, dadurch gekennzeichnet, daß sie dadurch hergestellt worden ist, daß wenigstens ein bituminöser Grundstoff mittels einer solchen Verbindung behandelt wird, die von einer Säure abgeleitet ist, die zumindest zwei, zum Eingehen einer Verbindung geeignete Gruppen aufweist, und zwar an zwei oder mehreren Stellen, die sich auf voneinander verschiedenen aromatischen Komplexen oder dem aromatischen Grundstoff befinden, um diese durch Brückenbildung zu verbinden, wobei die von einer Säure abgeleitete Verbindung aus der, durch die Dianhydride und die Säuredihalogenide bestehenden Gruppe ausgewählt ist.

2. Zusammensetzung nach Anspruch 1, dadurch gekennzeichnet, daß die von einer Säure abgeleitete Verbindung ein Phtaldianhydrid ist.

3. Verbindung nach Anspruch 1, dadurch gekennzeichnet, daß die von einer Säure abgeleitete Verbindung aus der aus Adipoyldichlorid und Terephtaloyldichlorid bestehenden Gruppe ausgewählt worden ist.

4. Zusammensetzung nach einem der Ansprüche 1 bis 3, dadurch gekennzeichnet, daß die von einer Säure abgeleitete Verbindung in den bituminösen Grundstoff eingebunden ist, und zwar nach Maßgabe eines Gehalts zwischen 0,05 Masse-% und 10 Masse-%, vorzugsweise zwischen 0,1 Masse-% und 3 Masse-% des Grundstoffs.

5. Zusammensetzung nach einem der Ansprüche 1 bis 4, dadurch gekennzeichnet, daß der bituminöse Grundstoff ein solcher Grundstoff ist, dessen Viskosität durch Mischung mit einem aromatischen Extrakt oder mit einer Aufschlämmung verdünnt ist.

6. Verfahren zur Herstellung einer Zusammensetzung nach Anspruch 1, dadurch gekennzeichnet, daß ein bituminöser Grundstoff unter Umrühren mit wenigstens einer, von einer Säure abgeleiteten Verbindung behandelt wird, welch letztere wenigstens zwei Gruppen aufweist, die jeweils zum Eingehen einer Verbindung mit einer Stelle von zwei aromatischen Elementen des bituminösen Grundstoffs geeignet sind und die aus der durch die Dianhydride und die Säuredihalogenide bestehenden Gruppe ausgewählt sind, und zwar bei einer Temperatur oberhalb der Erweichungstemperatur des bituminösen Grundstoffs und während einer solchen Zeitspanne, die zur Erzielung einer Brückenbildung der aromatischen Komplexe unter Mitwirkung der genannten Verbindung ausreichend ist.

7. Verfahren nach Anspruch 6, dadurch gekennzeichnet, daß die Behandlung des bituminösen Grundstoffs bei einer Temperatur zwischen 130 °C und 300 °C, vorzugsweise zwischen 160 °C und 230 °C durchgeführt wird.

8. Verfahren nach einem der Ansprüche 6 und 7, dadurch gekennzeichnet, daß die Behandlung des bituminösen Grundstoff ein Durchperlen eines Gases, und zwar vorzugsweise von Luft durch den bituminösen Grundstoff umfaßt, dem die genannte, von einer Säure abgeleitete Verbindung zugefügt worden ist.

9. Anwendung einer Zusammensetzung nach einem der Ansprüche 1 bis 5 oder einer Zusammensetzung, die nach einem Verfahren gemäß einem der Ansprüche 6 und 7 hergestellt worden ist zur Bereitstellung bituminöser Beschichtungen.

10. Anwendung einer Zusammensetzung nach einem der Ansprüche 1 bis 5 oder einer Zusammensetzung, die nach einem Verfahren gemäß einem der Ansprüche 6 und 7 hergestellt worden ist zur Bereitstellung bituminöser wäßriger Emulsionen.

11. Anwendung einer Zusammensetzung nach einem der Ansprüche 1 bis 5 oder einer solchen, die nach einem Verfahren gemäß einem der Ansprüche 6 und 7 hergestellt worden ist zur Bereitstellung oberflächlicher aus Anhydriden bestehender Überzüge.

## Claims

1. A modified bitumen composition, characterised in that it is obtained by treating at least one bituminous base with an acid-derived compound comprising at least two functionalities adapted to be grafted respectively to one or more sites situated on two or more different aromatic groups of the bituminous base so as to join them by bridging, said acid-derived compound being selected from the group comprising the acid dihalides and dianhydrides.

2. A composition according to claim 1, characterised in that acid-derived compound is a phthalic dianhydride.

3. A composition according to claim 1, characterised in that the acid-derived compound is selected from the group comprising adipoyl dichloride and terephthaloyl dichloride.

4. A composition according to any one of claims 1 to 3, characterised in that the acid-derived compound is incorporated in the bituminous base in an amount of between 0.05 % and 10 % by weight and, preferably, between 0.1 to 3 % by weight thereof.

5. A composition according to any one of claims 1 to 4, characterised in the bituminous base is a reduced viscosity base mixed with an aromatic extract or with a slurry.

6. A method of preparing a composition according to claim 1, characterised in that a bituminous base is treated, while being agitated, with at least one acid-derived compound comprising at least two functionalities each adapted to be grafted on one site of two aromatic elements of the bituminous base and selected from the group comprising the acid dihalides and dianhydrides, at a temperature higher than the softening temperature of the bituminous base and for a sufficient amount of time to effect the bridging of two aromatic groups by said compound.

7. A method of preparation according to claim 6, characterised in that the treatment of the bituminous base is carried out at a temperature of between 130 and 300°C and, preferably, between 160 and 230°C.

8. A method according to either one of claims 6 and 7, characterised in that the treatment of the bituminous base comprises bubbling gas and, preferably, air into the bituminous base, to which said acid-derived compound has been added.

9. Application of a composition according to any one of claims 1 to 5 or of a composition prepared by a method according to either one of claims 6 and 7 to the formation of bituminous coatings.

10. Application of a composition according to any one of claims 1 to 5 or of a composition prepared by a method according to either one of claims 6 and 7 to the formation of aqueous bituminous emulsions.

11. Application of a composition according to any one of claims 1 to 5 or prepared by a method according to either one of claims 6 and 7 to the formation of anhydride surface coatings.
